(19) Europäisches Patentamt / European Patent Office / Office européen des brevets

(11) **EP 3 702 248 A1**

(12) **EUROPEAN PATENT APPLICATION**

(43) Date of publication:
02.09.2020  Bulletin 2020/36

(51) Int Cl.:
$B62D\ 15/02$ (2006.01)   $B62D\ 5/04$ (2006.01)

(21) Application number: 20159065.0

(22) Date of filing: 24.02.2020

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 27.02.2019  JP 2019034176

(71) Applicant: JTEKT CORPORATION
Chuo-ku,
Osaka-shi,
Osaka 542-8502 (JP)

(72) Inventor: TAMAIZUMI, Terutaka
Osaka-shi, Osaka 542-8502 (JP)

(74) Representative: Winter, Brandl, Fürniss, Hübner,
Röss, Kaiser, Polte - Partnerschaft mbB
Patent- und Rechtsanwaltskanzlei
Alois-Steinecker-Straße 22
85354 Freising (DE)

(54) **STEERING CONTROLLER AND STEERING CONTROL METHOD**

(57) A steering controller is configured to execute an operation process that operates a drive circuit of an electric motor using an operation signal to control torque of the electric motor based on a steering torque input by a driver and a correction process that corrects a calculation parameter that occurs during calculation of the operation signal based on a driving support command value input from outside of the steering controller. The driving support command value is used to support driving by the driver. The correction process includes a conversion process that converts a dimension of the driving support command value to a dimension of the calculation parameter, and a process that corrects the calculation parameter using the driving support command value of which the dimension has been converted.

Fig.1

EP 3 702 248 A1

**Description**

BACKGROUND

1. Field

The following description relates to a steering controller and a steering control method for operating a steering actuator that incorporates an electric motor and steers steerable wheels.

2. Description of Related Art

Japanese Laid-Open Patent Publication No. 2004-203089 describes an example of a steering controller that controls an electric motor based on a steering torque applied by a driver. The electric motor generates an assist torque that assists steering.

Recently, consideration has been given to the establishment of a driving assistance system that assists the driving by a driver, such as an advanced driver assistance system (ADAS).

The above-described steering controller may hypothetically receive, for example, a correction amount of a steerable angle from the outside as a driving support command value that is used to support driving. In this case, the correction amount differs in dimension from an assist torque that is a calculation parameter occurring during calculation of an operation signal for operating a drive circuit of the electric motor. Thus, in the above-described steering controller, reflecting the correction amount on the execution of the control of the electric motor is difficult. Accordingly, reflecting the driving support command value on the control of the electric motor is difficult depending on the dimension of the driving support command value.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Examples of the present disclosure will now be described.

Example 1: A steering controller for operating a steering actuator that incorporates an electric motor and steers a steerable wheel is provided. The steering controller is configured to execute an operation process that operates a drive circuit of the electric motor using an operation signal to control torque of the electric motor based on a steering torque input by a driver and a correction process that corrects a calculation parameter that occurs during calculation of the operation signal based on a driving support command value input from outside of the steering controller. The driving support command value is used to support driving by the driver. The correction process includes a conversion process that converts a dimension of the driving support command value into a dimension of the calculation parameter, and a process that corrects the calculation parameter using the driving support command value of which the dimension has been converted.

In the above-described configuration, the calculation parameter can be corrected based on the driving support command value by converting the dimension of the driving support command value into the dimension of the calculation parameter. This allows the driving support command value to be reflected on the operation of the drive circuit.

Example 2: In the steering controller according to Example 1, the driving support command value has a dimension of angle, the calculation parameter has a dimension of torque, a complex process includes a first order differentiation process and a first order delay process, and the conversion process includes a process that converts the driving support command value into the dimension of torque using any one of a second order differentiation process, a second order delay process, and the complex process.

The second order time differential value of angle is angular acceleration. Angular acceleration is proportional to torque. The second order time differential value can also be obtained using the second order delay process. The first order time differential value can be obtained using the first order delay process. This allows the second order time differential value to be also obtained using the complex process including the first order delay process and the first order delay process. In the above-described configuration, in view of this fact, the driving support command value having the dimension of angle can be converted into the dimension of torque using any one of the second order differentiation process, the second order delay process, and the complex process.

Example 3: In the steering controller according to Example 1, the driving support command value has a dimension of angle, the calculation parameter has a dimension of angular acceleration, a complex process includes a first order differentiation process and a first order delay process, and the conversion process includes a process that converts the driving support command value into the dimension of angular acceleration using any one of a second order differentiation process, a second order delay process, and the complex process.

The second order time differential value of angle is angular acceleration. The second order time differential value can also be obtained using the second order delay process or the complex process that includes the first order differentiation process and the first order delay process. In the above-described configuration, in view of this fact, the driving support command value having the dimension of angle can be converted into the dimension of angular acceleration.

Example 4: In the steering controller according to Example 1, the driving support command value has a dimension of angle, the calculation parameter has a dimension of angular velocity, and the conversion process includes a process that converts the driving support command value into the dimension of angular velocity using a second order differentiation process or a second order delay process.

The first order time differential value of angle is angular velocity. The first order time differential value can also be obtained using the first order delay process. In the above-described configuration, in view of this fact, the driving support command value having the dimension of angle can be converted into the dimension of angular velocity.

Example 5: In the steering controller according to Example 1, the driving support command value has a dimension of angle, the calculation parameter has a dimension of current flowing through the electric motor, a complex process includes a first order differentiation process and a first order delay process, and the conversion process includes a process that converts the driving support command value into the dimension of current using any one of a second order differentiation process, a second order delay process, and the complex process.

The second order time differential value of angle is angular acceleration. Angular acceleration is proportional to torque. Torque is correlated with the current of the electric motor. The second order time differential value can also be obtained using the second order delay process or the complex process that includes the first order differentiation process and the first order delay process. In the above-described configuration, in view of this fact, the driving support command value having the dimension of angle can be converted into the dimension of current.

Example 6: In the steering controller according to Example 1, the driving support command value has a dimension of torque, the calculation parameter has a dimension of angular acceleration, and the conversion process includes a process that converts the driving support command value into the dimension of angular acceleration using a multiplication process that multiplies a coefficient by the driving support command value.

Once a target object is defined, torque and angular acceleration can be related to each other by an inertia coefficient. In the above-described configuration, in view of this fact, the driving support command value having the dimension of torque can be converted into the dimension of angular acceleration.

Example 7: In the steering controller according to Example 1, the driving support command value has a dimension of torque, the calculation parameter has a dimension of angular velocity, and the conversion process includes a process that converts the driving support command value into the dimension of angular velocity using an integration process.

Once a target object is defined, torque and angular acceleration can be related to each other by an inertia coefficient. Thus, torque is proportional to angular acceleration. Angular velocity can be obtained by integrating angular acceleration with respect to time. In the above-described configuration, in view of this fact, the driving support command value having the dimension of torque can be converted into the dimension of angular velocity.

Example 8: In the steering controller according to Example 1, the driving support command value has a dimension of torque, the calculation parameter has a dimension of angle, and the conversion process includes a process that converts the driving support command value into the dimension of angle using a double integration process with respect to time.

Once a target object is defined, torque and angular acceleration can be related to each other by an inertia coefficient. Thus, torque is proportional to angular acceleration. Angle can be obtained by doubly integrating angular acceleration with respect to time. In the above-described configuration, in view of this fact, the driving support command value having the dimension of torque can be converted into the dimension of angle.

Example 9: In the steering controller according to Example 1, the driving support command value has a dimension of current, the calculation parameter has a dimension of any one of parameters including torque, angle, angular velocity, and angular acceleration, and the conversion process includes a process that converts the driving support command value into the dimension of the one of the parameters.

Torque of the electric motor is controlled by controlling current. Thus, current can be converted into torque. Once a target object is defined, torque and angular acceleration can be related to each other by an inertia coefficient. Thus, torque is proportional to angular acceleration. Angular velocity can be obtained by integrating angular acceleration with respect to time. Angle can be obtained by integrating angular velocity with respect to time. In the above-described configuration, in view of this fact, the conversion process is executed to convert the driving support command value having the dimension of current.

Example 10: In the steering controller according to Example 1, the driving support command value has a dimension of angular velocity, the calculation parameter has a dimension of any one of parameters including angle, angular acceleration, and torque, and the conversion process includes a process that converts the driving support command value into the dimension of the one of the parameters.

Angle can be obtained by integrating angular velocity with respect to time. Angular acceleration can be obtained by differentiating angular velocity with respect to time. Once a target object is defined, torque and angular acceleration can be related to each other by an inertia coefficient. Thus, torque is proportional to angular acceleration. In the above-described configuration, in view of this fact, the conversion process is executed to convert the driving support command value having the dimension of angular velocity.

Example 11: In the steering controller according to Example 1, the driving support command value has a dimension of angular acceleration, the calculation parameter has a dimension of any one of parameters including angle, angular velocity, and torque, and the conversion process includes a process that converts the driving support command value into the dimension of the one of the parameters.

Angular velocity can be obtained by integrating angular acceleration with respect to time. Angle can be obtained by doubly integrating angular acceleration with respect to time. Once a target object is defined, torque and angular acceleration can be related to each other by an inertia coefficient. Thus, torque is proportional to angular acceleration. In the above-described configuration, in view of this fact, the conversion process is executed to convert the driving support command value having the dimension of angular acceleration.

Example 12: In the steering controller according to Example 2, the operation process includes a process that calculates a steering operation amount used for feedback control that adjusts the steering torque to a target torque, the steering operation amount having the dimension of torque, and a process that operates the drive circuit based on the steering operation amount, and the calculation parameter is the steering operation amount.

In the above-described configuration, the driving support command value having the dimension of angle can be reflected on the steering operation amount, which is used for the torque feedback control, by executing the conversion process.

Examples 13: In the steering controller according to Example 3 or 6, the operation process includes an angle command value calculation process that calculates an angle command value based on the steering torque, the angle command value being a command value of a convertible angle that is convertible into a steerable angle of the steerable wheel, an angle operation amount calculation process that calculates an angle operation amount used to adjust the convertible angle to the angle command value, and a process that operates the drive circuit based on the angle operation amount, the angle command value calculation process includes a process that calculates a target angular acceleration based on the steering torque, and the calculation parameter is the target angular acceleration.

In the above-described configuration, the driving support command value of which the dimension has been converted is used to correct the target angular acceleration serving as an intermediate variable that occurs during calculation of the angle command value. This allows the driving support command value to be reflected on the angle command value and consequently allows the driving support command value to be reflected on the control of the steerable angle.

Examples 14: In the steering controller according to Example 4 or 7, the operation process includes an angle command value calculation process that calculates an angle command value based on the steering torque, the angle command value being a command value of a convertible angle that is convertible into a steerable angle of the steerable wheel, an angle operation amount calculation process that calculates an angle operation amount used to adjust the convertible angle to the angle command value, and a process that operates the drive circuit based on the angle operation amount, the angle command value calculation process includes a process that calculates a target angular velocity based on the steering torque, and the calculation parameter is the target angular velocity.

In the above-described configuration, the driving support command value of which the dimension has been converted is used to correct the target angular velocity serving as an intermediate variable that occurs during calculation of the angle command value. This allows the driving support command value to be reflected on the angle command value and consequently allows the driving support command value to be reflected on the control of the steerable angle.

Example 15: In the steering controller according to Example 8, the operation process includes an angle operation amount calculation process that calculates an angle operation amount used for a feedback control that adjusts a convertible angle to an angle command value of the convertible angle, the convertible angle being convertible into a steerable angle of the steerable wheel, a process that operates the drive circuit based on the angle operation amount, and the calculation parameter is one of the convertible angle and the angle command value input to the angle operation amount calculation process.

In the above-described configuration, the conversion process is executed to convert the driving support command value having the dimension of torque. This allows the driving support command value to be reflected on the parameter used for the angle feedback control.

Other features and aspects will be apparent from the following detailed description, the drawings, and the claims.

BRIEF DESCRIPTION OF THE DRAWINGS

Fig. 1 is a diagram showing an electric power steering according to a first embodiment.

Fig. 2 is a block diagram illustrating processes executed by the steering controller of the first embodiment.

Fig. 3 is a block diagram illustrating processes executed by the steering controller according to a second embodiment.

Fig. 4 is a block diagram illustrating processes executed by the steering controller according to a third embodiment.

Fig. 5A is a block diagram illustrating processes executed by the steering controller according to a modification of the above-described embodiments.

Fig. 5B is a block diagram illustrating processes executed by the steering controller according to a modification of the above-described embodiments.

Fig. 6A is a block diagram illustrating processes executed by the steering controller according to a modification of the above-described embodiments.

Fig. 6B is a block diagram illustrating processes executed by the steering controller according to a modification of the above-described embodiments.

Fig. 6C is a block diagram illustrating processes executed by the steering controller according to a modification of the above-described embodiments.

Fig. 6D is a block diagram illustrating processes executed by the steering controller according to a modification of the above-described embodiments.

Fig. 7A is a block diagram illustrating processes executed by the steering controller according to a modification of the above-described embodiments.

Fig. 7B is a block diagram illustrating processes executed by the steering controller according to a modification of the above-described embodiments.

Fig. 7C is a block diagram illustrating processes executed by the steering controller according to a modification of the above-described embodiments.

Fig. 7D is a block diagram illustrating processes executed by the steering controller according to a modification of the above-described embodiments.

Fig. 8A is a block diagram illustrating processes executed by the steering controller according to a modification of the above-described embodiments.

Fig. 8B is a block diagram illustrating processes executed by the steering controller according to a modification of the above-described embodiments.

Fig. 8C is a block diagram illustrating processes executed by the steering controller according to a modification of the above-described embodiments.

Fig. 9A is a block diagram illustrating processes executed by the steering controller according to a modification of the above-described embodiments.

Fig. 9B is a block diagram illustrating processes executed by the steering controller according to a modification of the above-described embodiments.

Fig. 9C is a block diagram illustrating processes executed by the steering controller according to a modification of the above-described embodiments.

Fig. 10A is a block diagram illustrating processes executed by the steering controller according to a modification of the above-described embodiments.

Fig. 10B is a block diagram illustrating processes executed by the steering controller according to a modification of the above-described embodiments.

Fig. 10C is a block diagram illustrating processes executed by the steering controller according to a modification of the above-described embodiments.

Throughout the drawings and the detailed description, the same reference numerals refer to the same elements. The drawings may not be to scale, and the relative size, proportions, and depiction of elements in the drawings may be exaggerated for clarity, illustration, and convenience.

DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

First Embodiment

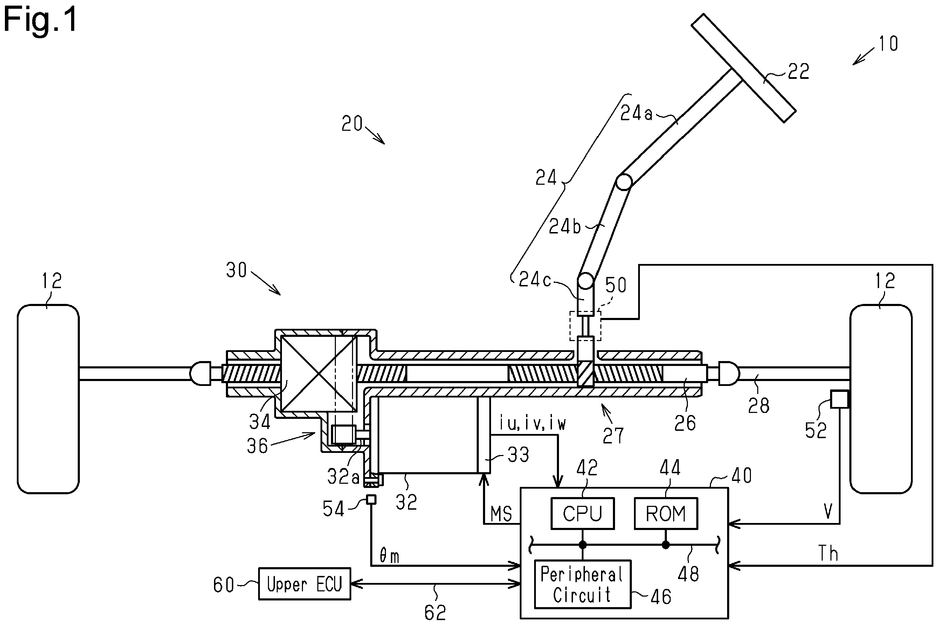

As shown in Fig. 1, an electric power steering 10 includes a steering mechanism 20, which steers steerable wheels 12 based on the operation of a steering wheel 22 performed by a driver, and a steering actuator 30, which electrically steers the steerable wheels 12.

The steering mechanism 20 includes the steering wheel 22, a steering shaft 24, which is fixed to the steering wheel 22, and a rack-and-pinion mechanism 27. The steering shaft 24 includes a column shaft 24a, which is coupled to the steering wheel 22, an intermediate shaft 24b, which is coupled to the lower end of the column shaft 24a, and a pinion shaft 24c, which is coupled to the lower end of the intermediate shaft 24b. The lower end of the pinion shaft 24c is coupled to a rack shaft 26 by the rack-and-pinion mechanism 27. The rack-and-pinion mechanism 27 includes the pinion shaft 24c and the rack shaft 26. The opposite ends of the rack shaft 26 are respectively coupled to the left and right steerable wheels 12 by a tie rod 28. Thus, the rack-and-pinion mechanism 27 converts rotation of the steering wheel 22 (i.e., rotation of the steering shaft 24) into reciprocation of the rack shaft 26 in the axial direction. The reciprocation is transmitted to the steerable wheels 12 from the tie rod 28, which is coupled to the opposite ends of the rack shaft 26, thereby changing the steerable angles of the steerable wheels 12. The axial direction of the rack shaft 26 corresponds to the sideward direction in Fig. 1.

The steering actuator 30 shares the rack shaft 26 with the steering mechanism 20. Further, the steering actuator 30 includes an electric motor 32, an inverter 33, a ball screw mechanism 34, and a belt reduction drive 36. The electric motor 32 is the generator of power that steers the steerable wheels 12. In the present embodiment, a three-phase surface permanent magnet synchronous motor (SPMSM) is exemplified as the electric motor 32. The ball screw mechanism 34 is arranged around the rack shaft 26 and coupled to the rack shaft 26. The belt reduction drive 36 transmits rotation force of an output shaft 32a of the electric motor 32 to the ball screw mechanism 34. The ball screw mechanism 34 and the belt reduction drive 36 convert the rotation force of the output shaft 32a of the electric motor 32 into force that reciprocates the rack shaft 26 in the axial direction. The axial force given to the rack shaft 26 steers the steerable wheels 12.

The steering controller 40 controls the steerable wheels 12. The steering controller 40 operates the steering actuator 30 in order to control a steerable angle, which is the control amount of each steerable wheel 12. When controlling the control amount, the steering controller 40 refers to the state quantities detected by various sensors. The state quantities include a steering torque Th, which is detected by a torque sensor 50, and a vehicle speed V, which is detected by a vehicle speed sensor 52. The steering torque Th is input by the driver via the steering wheel 22. The state quantities also include a rotation angle θm of the output shaft 32a, which is detected by a rotation angle sensor 54, and include current iu, current iv, and current iw, which flow through the electric motor 32. The current iu, the current iv, and the current iw can be detected based on voltage drop caused by the shunt resistor of each leg of the inverter 33.

The steering controller 40 is capable of communicating with an upper ECU 60 via a communication line 62. The upper ECU 60 has a function of outputting, to the steering controller 40, a command value to assist the driving by a driver. That is, the command value to assist the driving of the driver from the upper ECU 60, which is the outside of the steering controller 40, is input to the steering controller 40.

The steering controller 40 includes a CPU 42, a ROM 44, and a peripheral circuit 46. The CPU 42, the ROM 44, and the peripheral circuit 46 are capable of communicating with one another via a local network 48. The peripheral circuit 46 includes various circuits such as a circuit that generates a clock signal specifying an internal operation, a power supply circuit, and a reset circuit.

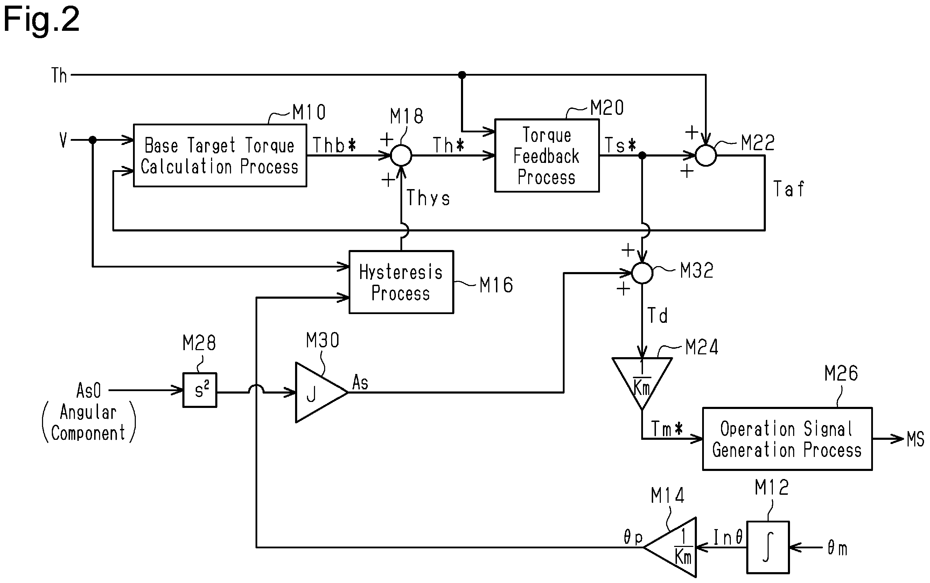

Fig. 2 shows part of the processes executed by the steering controller 40. The processes of Fig. 2 are implemented by the CPU 42 executing programs stored in the ROM 44.

A base target torque calculation process M10 is a process that calculates a base target torque Thb* based on an axial force Taf, which will be described later. The base target torque Thb* is the base value of a target torque Th*, which should be input by the driver to the steering shaft 24 via the steering wheel 22.

The axial force Taf is force applied to the rack shaft 26 in the axial direction. The axial force Taf has an amount corresponding to a side force acting on each steerable wheel 12. Thus, the side force can be obtained from the axial force Taf. It is desired that the side force be used to determine the torque that should be input by the driver to the steering shaft 24 via the steering wheel 22. Accordingly, the base target torque calculation process M10 calculates the base target torque Thb* in accordance with the side force obtained from the axial force Taf.

More specifically, even if the absolute value of the axial force Taf is the same, the base target torque calculation process M10 calculates the absolute value of the base target torque Thb* to be smaller when the vehicle speed V is low than when the vehicle speed V is high. This can be achieved by, for example, the CPU 42 obtaining the base target torque Thb* through map calculation in a state in which map data is stored in the ROM 44 in advance.

The map data refers to a data set of discrete values of input variables and values of output variables each corresponding to a value of the input variables. In the map data stored in the ROM 44, the axial force Taf or a lateral acceleration obtained from the axial force Taf and the vehicle speed V are set as input variables, and the base target torque Thb* is set as an output variable.

For example, when the value of an input variable matches one of the values of input variables on the map data, the map calculation uses the value of the corresponding output variable of the map data as the calculation result. When the value of the input variable does not match any of the values of the input variable on the map data, a value obtained by interpolation of multiple values of the output variable included in the map data is used as the calculation result.

An integration process M12 is a process that calculates an integration value Inθ of the rotation angle θm of the electric motor 32. In the present embodiment, the steerable angle of the steerable wheel 12 is set to 0 when the vehicle travels straight, and the integration value Inθ is set to 0 when the steerable angle is 0. A conversion process M14 is a process that calculates the pinion angle θp by dividing the integration value Inθ by a deceleration ratio Km from the steering shaft 24 to the electric motor 32. The pinion angle θp is a rotation angle of the pinion shaft 24c, which is a convertible angle that can be converted into the steerable angle of each steerable wheel 12.

A hysteresis process M16 is a process that calculates and outputting a hysteresis correction amount Thys, which is used to correct the base target torque Thb*, based on a pinion angle θp. More specifically, the hysteresis process M16 includes a process that calculates the hysteresis correction amount Thys such that the absolute value of the target torque Th* is larger when steering the steering wheel 22 than when returning the steering wheel 22. The hysteresis process M16 distinguishes the steering period from the returning period of the steering wheel 22 based on, for example, changes in the pinion angle θp. The hysteresis process M16 includes a process that variably sets the hysteresis correction amount Thys in accordance with the vehicle speed V.

A hysteresis reflection process M18 is a process that calculates the target torque Th* by adding the hysteresis correction amount Thys to the base target torque Thb*.

A torque feedback process M20 is a process that calculates a steering operation amount Ts*. The steering operation amount Ts* includes a feedback operation amount, which is used for feedback control that adjusts the steering torque Th to the target torque Th*. The feedback operation amount is used to increase the absolute value of a torque command value Tm* for the electric motor 32 when, for example, the steering torque Th and the target torque Th* are both positive and the steering torque Th is larger than the target torque Th*. The steering operation amount Ts* is an amount corresponding to the torque command value Tm* for the electric motor 32 and is also an amount converted into torque applied to the steering shaft 24 in the present embodiment.

An axial force calculation process M22 is a process that calculates the axial force Taf by adding the steering torque Th to the steering operation amount Ts*. The steering torque Th and the steering operation amount Ts* are applied to the steering shaft 24. Thus, in the present embodiment, the axial force Taf is a value obtained by converting, into the torque applied to the steering shaft 24, force applied in the axial direction of the rack shaft 26.

When the upper ECU 60 does not input a driving support command value As0 to the steering controller 40, the steering operation amount Ts* serves as the required torque Td for the steering actuator 30 with the steering operation amount Ts* unchanged. That is, the required torque Td is a value that is not corrected based on the driving support command value As0.

A conversion process M24 is a process that converts the required torque Td into a torque command value Tm*, which is a command value of the torque for the electric motor 32, by dividing the required torque Td by the deceleration ratio Km.

An operation signal generation process M26 is a process that generates and outputs an operation signal MS of the inverter 33, which is used to adjust the torque output by the electric motor 32 to the torque command value Tm*. The operation signal MS is actually an operation signal for each leg of the inverter 33.

When the upper ECU 60 inputs the driving support command value As0 having the dimension of angle to the steering controller 40, the driving support command value As0 is input to a second order differentiation process M28. An output value of the second order differentiation process M28 is input to an inertia coefficient multiplication process M30. The inertia coefficient multiplication process M30 multiplies the output value by an inertia coefficient J to calculate a driving support command value As having the dimension of torque. The inertia coefficient J is obtained by modelling the inertia of the electric power steering 10.

An addition process M32 is a process that calculates the required torque Td by adding the driving support command value As to the steering operation amount Ts*. That is, the required torque Td is a value that is corrected based on the driving support command value As.

The operation and advantage of the present embodiment will now be described.

When the CPU 42 does not receive the driving support command value As0 from the outside of the steering controller 40, the CPU 42 calculates the required torque Td based on the steering operation amount Ts*, which is used for the feedback control that adjusts the steering torque Th to the target torque Th*, without correction using the driving support command value As. Then, the CPU 42 controls the torque of the electric motor 32 such that the torque has the torque command value Tm*, which is determined by the required torque Td calculated without correction using the driving support command value As. Thus, the torque of the electric motor 32 is controlled such that the steering torque Th becomes the target torque Th*. This improves the steering feel.

When receiving the driving support command value As0 having the dimension of angle from the outside of the steering controller 40, the CPU 42 executes the second order differentiation process M28 to convert the driving support command value As0 into the dimension of angular acceleration. Further, the CPU 42 executes the inertia coefficient multiplication process M30 to convert the output value of the second order differentiation process M28 into the driving support command value As having the dimension of torque. The CPU 42 executes these processes to convert the driving support command value As0 having the dimension of angle into the driving support command value As having the dimension of torque. The CPU 42 adds the driving support command value As to the steering operation amount Ts* to calculate the required torque Td for the steering actuator 30. Thus, the CPU 42 controls the torque of the electric motor 32 such that the torque has the torque command value Tm*, which is determined by the required torque Td corrected using the driving support command value As. This causes the electric motor 32 to output torque in which torque corresponding to driving assistance by the upper ECU 60 is superimposed on torque suitable for setting the steering torque Th to the target torque Th*. Thus, the driving support command value As0 obtained by the upper ECU 60 can be properly reflected on the control of torque of the electric motor 32.

Second Embodiment

A second embodiment will now be described with reference to the drawings. The differences from the first embodiment will mainly be discussed.

In the above-described embodiment, the steering controller 40 executes the feedback control that adjusts the steering torque Th to the target torque Th*. In the present embodiment, the steering controller 40 executes a feedback control that adjusts the pinion angle $\theta p$ to a pinion angle command value $\theta p^*$.

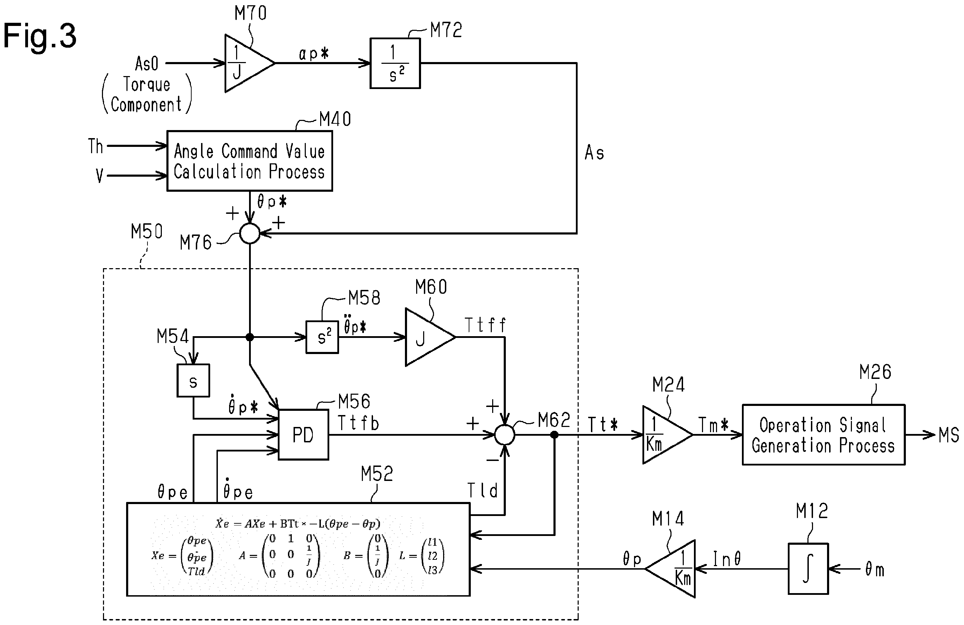

Fig. 3 shows the processes executed by the steering controller 40. The processes of Fig. 3 are implemented by the CPU 42 executing programs stored in the ROM 44. In Fig. 3, the process corresponding to the process shown in Fig. 2 is given the same reference number for the illustrative purposes, and the explanation is omitted.

An angle command value calculation process M40 is a process that calculates the pinion angle command value $\theta p^*$ based on the steering torque Th and the vehicle speed V.

An angle feedback process M50 (angle operation amount calculation process) is a process that calculates, when the upper ECU 60 does not input the driving support command value As0, an angle operation amount Tt*. The angle operation amount Tt* is used to adjust the pinion angle $\theta p$ to the pinion angle command value $\theta p^*$ that is to be input. The angle operation amount Tt* is an amount corresponding to the required torque for the steering actuator 30 and is also an amount converted into torque applied to the steering shaft 24 in the present embodiment.

The pinion angle command value $\theta p^*$ input to the angle feedback process M50 is the original pinion angle command value $\theta p^*$ output by the angle command value calculation process M40 or is a value obtained by using a driving assistance command value As (described later) to correct the pinion angle command value $\theta p^*$ output by the angle command value calculation process M40.

The angle feedback process M50 includes a disturbance observer M52, which estimates a disturbance torque Tld. The disturbance Tld is torque excluded from the torque that affects the pinion angle $\theta p$ other than the angle operation amount Tt*.

In the present embodiment, the disturbance torque Tld is converted into the torque applied to the steering shaft 24. The disturbance observer M52 estimates the disturbance torque Tld with the following expression (c1) using the angle operation amount Tt* converted into the torque of the steering shaft 24.

$$J \cdot \theta p^{*''} = Tt^* + Tld \qquad (c1)$$

More specifically, in the present embodiment, the disturbance observer M52 calculates the disturbance torque Tld and an estimated value $\theta pe$ with the following expression (c2) using a matrix L with three rows and one column, which specifies the estimated value $\theta pe$ of the pinion angle $\theta p$, the angle operation amount Tt*, and observer gains l1, l2, and l3.

$$\dot{X}e = AXe + BTt * -L(\theta pe - \theta p) \cdots (c2)$$

$$Xe = \begin{pmatrix} \theta pe \\ \dot{\theta pe} \\ Tld \end{pmatrix} \qquad A = \begin{pmatrix} 0 & 1 & 0 \\ 0 & 0 & \dfrac{1}{J} \\ 0 & 0 & 0 \end{pmatrix} \qquad B = \begin{pmatrix} 0 \\ \dfrac{1}{J} \\ 0 \end{pmatrix} \qquad L = \begin{pmatrix} l1 \\ l2 \\ l3 \end{pmatrix}$$

A differentiation calculation process M54 is a process that calculates a pinion angular velocity command value by differentiating the pinion angle command value θp*.

A feedback term calculation process M56 is a process that calculates a feedback operation amount Ttfb, which is the sum of a proportional term corresponding to the difference between the pinion angle command value θp* and the estimated value θpe and a differential term corresponding to the difference between a first order time differential value of the pinion angle command value θp* and a first order time differential value of the estimated value θpe.

A second order differentiation process M58 is a process that calculates a second order time differential value of the pinion angle command value θp*. A feedforward term calculation process M60 is a process that calculates a feedforward operation amount Ttff by multiplying an output value of the second order differentiation process M58 by the inertia coefficient J, which has been described in the first embodiment. A two-degree-of-freedom operation amount calculation process M62 is a process that calculates the angle operation amount Tt* by subtracting the disturbance torque Tld from the sum of the feedback operation amount Ttfb and the feedforward operation amount Ttff.

When the upper ECU 60 inputs the driving support command value As0 having a torque component to the steering controller 40, an inertia coefficient division process M70 divides the driving support command value As0 by the inertia coefficient J. Subsequently, a double integration process M72 doubly integrates an output value of the inertia coefficient division process M70 with respect to time to calculate the driving support command value As having the dimension of angle. An addition process M76 is a process that adds the driving support command value As to the pinion angle command value θp*. This causes the pinion angle command value θp* to be corrected by the driving support command value As.

The operation and advantage of the present embodiment will now be described.

When the CPU 42 does not receive the driving support command value As0 from the outside of the steering controller 40, the CPU 42 executes the feedback control that adjusts the pinion angle θp to the pinion angle command value θp* calculated without correction using the driving support command value As.

When receiving the driving support command value As0 having the dimension of torque from the outside of the steering controller 40, the CPU 42 converts the received driving support command value As0 into the driving support command value As having the dimension of angle and adds the driving support command value As to the pinion angle command value θp*. Executing the feedback control that adjusts the pinion angle θp to the pinion angle command value θp* corrected using the driving support command value As causes the driving support command value As0 to be reflected on the control of the pinion angle θp.

Third Embodiment

A third embodiment will now be described with reference to the drawings. The differences from the first embodiment will mainly be discussed.

In the present embodiment, the steering controller 40 operates the steering actuator 30 by making combined use of the torque feedback process M20 of the first embodiment and the angle feedback process M50 of the second embodiment.

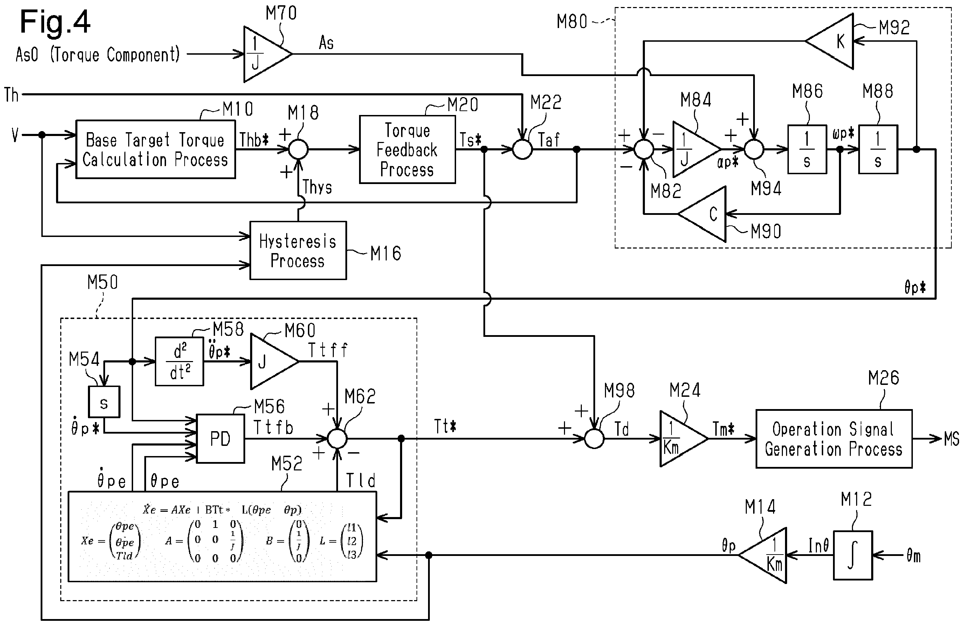

Fig. 4 shows the processes executed by the steering controller 40. The processes of Fig. 4 are implemented by the CPU 42 executing programs stored in the ROM 44. In Fig. 4, the process corresponding to the process shown in Fig. 2 or 3 is given the same reference number for the illustrative purposes, and the explanation is omitted.

An angle command value calculation process M80 is a process that calculates the pinion angle command value θp*. More specifically, the angle command value calculation process M80 is a process that calculates the pinion angle command value θp* using a model expression represented by the following expression (c3).

$$\mathsf{Taf} = K \cdot \theta p^* + C \cdot \theta p^{*'} + J \cdot \theta p^{*''} \qquad (c3)$$

The model represented by the expression (c3) is obtained by modelling a value indicated by the pinion angle θp when the steering shaft 24 receives the torque having the same amount as the axial force Taf. In the model represented by the expression (c3), a viscosity coefficient C is obtained by modelling, for example, friction of the electric power steering 10. The inertia coefficient J is obtained by modelling the inertia of the electric power steering 10. An elasticity coefficient K is obtained by modelling the specification of the suspension or wheel alignment of a vehicle incorporating the electric power steering 10.

More specifically, a torque command value calculation process M82 is a process that calculates a torque command value by subtracting a viscous term $C \cdot \theta p^*$ and an elastic term $K \cdot \theta p^*$ from the axial force Taf. An angular acceleration command value calculation process M84 is a process that calculates an angular acceleration command value $\alpha p^*$ by dividing an output value of the torque command value calculation process M82 by the inertia coefficient J. An integration process M86 is a process that calculates, when the driving support command value As0 is not input from the outside, an angular velocity command value $\omega p^*$ ($\omega p^* = \theta p^{*\prime}$) by integrating the angular acceleration command value $\alpha p^*$, which is an output value of the angular acceleration command value calculation process M84, with respect to time. An integration process M88 is a process that calculates the pinion angle command value $\theta p^*$ by integrating the angular velocity command value $\omega p^*$ with respect to time.

A viscous term calculation process M90 is a process that calculates a viscous term by multiplying the angular velocity command value $\omega p^*$ by the viscosity coefficient C. An elastic term calculation process M92 is a process that calculates an elastic term by multiplying the pinion angle command value $\theta p^*$ by the elasticity coefficient K.

An addition process M98 is a process that adds the steering operation amount Ts* and the angle operation amount Tt* to calculate the required torque Td and inputs the required torque Td to the conversion process M24.

When the upper ECU 60 inputs the driving support command value As0 having the dimension of torque to the steering controller 40, the inertia coefficient division process M70 divides the driving support command value As0 by the inertia coefficient J to convert the driving support command value As0 into the driving support command value As having the dimension of angular acceleration. The addition process M94 is a process that adds the driving support command value As to the angular acceleration command value $\alpha p^*$. This causes the angular acceleration command value $\alpha p^*$ to be corrected by the driving support command value As.

The operation and advantage of the present embodiment will now be described.

When the CPU 42 does not receive the driving support command value As0 from the outside of the steering controller 40, the CPU 42 executes the feedback control that adjusts the pinion angle $\theta p$ to the pinion angle command value $\theta p^*$ calculated without correction using the driving support command value As.

When receiving the driving support command value As0 having the dimension of torque from the outside of the steering controller 40, the CPU 42 converts the received driving support command value As0 into the driving support command value As having the dimension of angular acceleration and adds the driving support command value As to the angular acceleration command value $\alpha p^*$. The CPU 42 calculates the pinion angle command value $\theta p^*$ based on the angular acceleration command value $\alpha p^*$ corrected using the driving support command value As and adjusts the pinion angle $\theta p$ to the pinion angle command value $\theta p^*$. This allows the driving support command value As0 to be reflected on the control of the pinion angle $\theta p$.

Correspondence

The correspondence between the items in the above embodiments and the items described in the above-described SUMMARY is as follows. In the following description, the correspondence is shown for each of the numbers in the examples described in the SUMMARY.

The operation process in Example 1 corresponds to the base target torque calculation process M10, the hysteresis process M16, the hysteresis reflection process M18, the torque feedback process M20, the axial force calculation process M22, the conversion process M24, and the operation signal generation process M26 in Fig. 2. In Fig. 3, the operation process corresponds to the angle command value calculation process M40, the angle feedback process M50, the conversion process M24, and the operation signal generation process M26. In Fig. 4, the operation process corresponds to the base target torque calculation process M10, the hysteresis process M16, the hysteresis reflection process M18, the torque feedback process M20, the axial force calculation process M22, the angle command value calculation process M80, the angle feedback process M50, the addition process M98, the conversion process M24, and the operation signal generation process M26.

The correction process in Example 1 corresponds to the second order differentiation process M28, the inertia coefficient multiplication process M30, and the addition process M32 in Fig. 2. In Fig. 3, the correction process corresponds to the inertia coefficient division process M70, the double integration process M72, and the addition process M76. In Fig. 4, the correction process corresponds to the inertia coefficient division process M70 and the addition process M94.

The contents of the process in Example 2 correspond to the second order differentiation process M28, the inertia coefficient multiplication process M30, and the addition process M32 in Fig. 2.

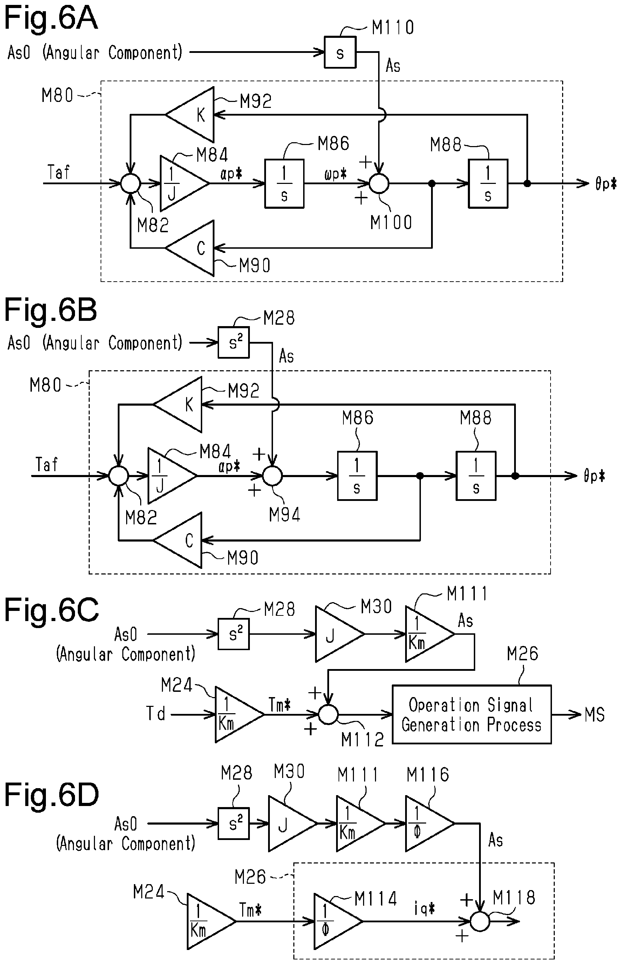

The contents of the process in Example 3 do not correspond to any process in the above-described embodiments and correspond to Fig. 6B.

The contents of the process in Example 4 do not correspond to any process in the above-described embodiments and correspond to Fig. 6A.

The contents of the process in Example 5 do not correspond to any process in the above-described embodiments and correspond to Fig. 6B.

The contents of the process in Example 6 correspond to the inertia coefficient division process M70 and the addition process M94 in Fig. 4.

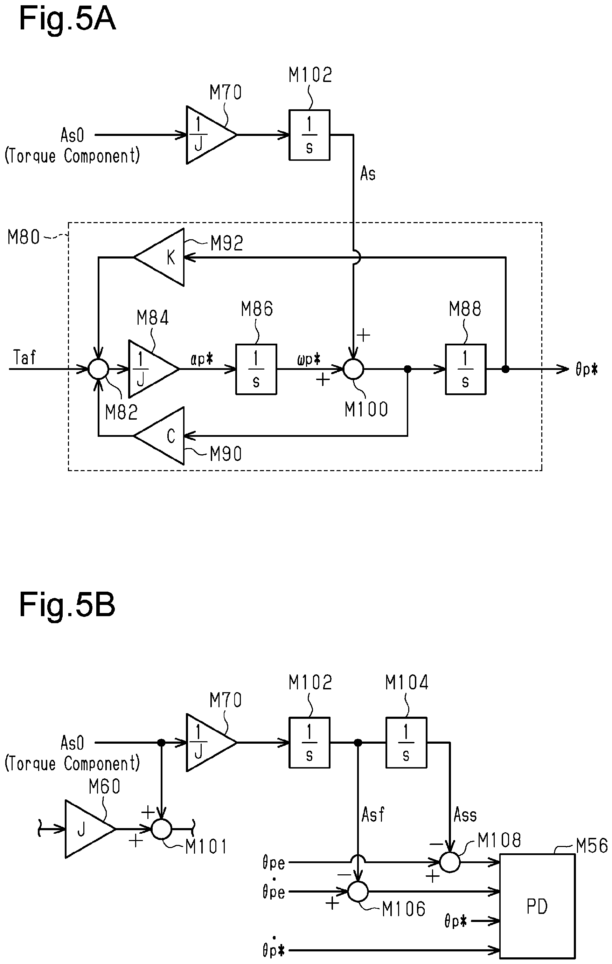

The contents of the process in Example 7 do not correspond to any process in the above-described embodiments and correspond to Fig. 5A.

The contents of the process in Example 8 correspond to the inertia coefficient division process M70, the double integration process M72, and the addition process M76 in Fig. 3.

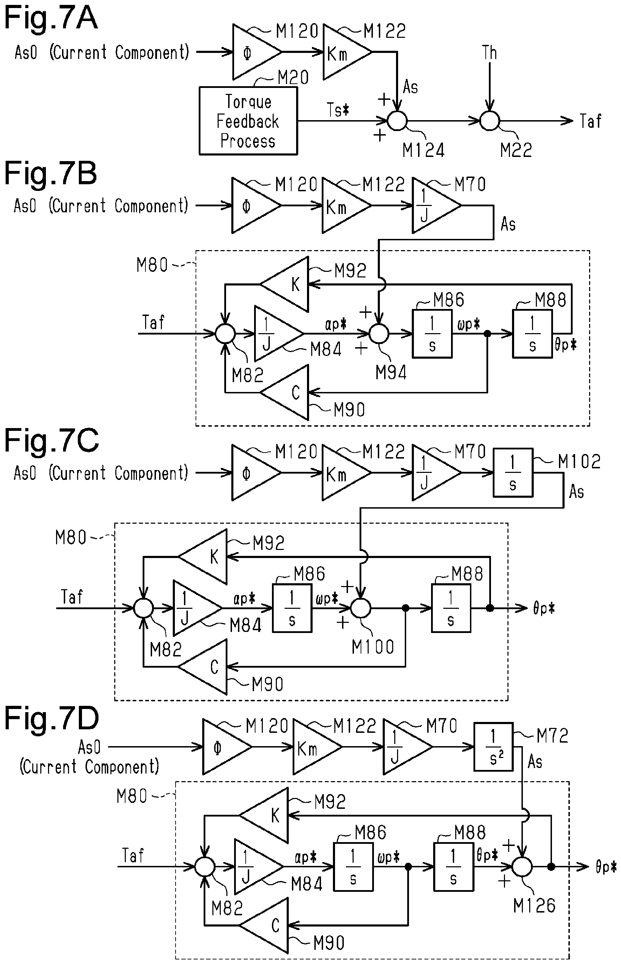

The contents of the process in Example 9 do not correspond to any process in the above-described embodiments and correspond to Fig. 7.

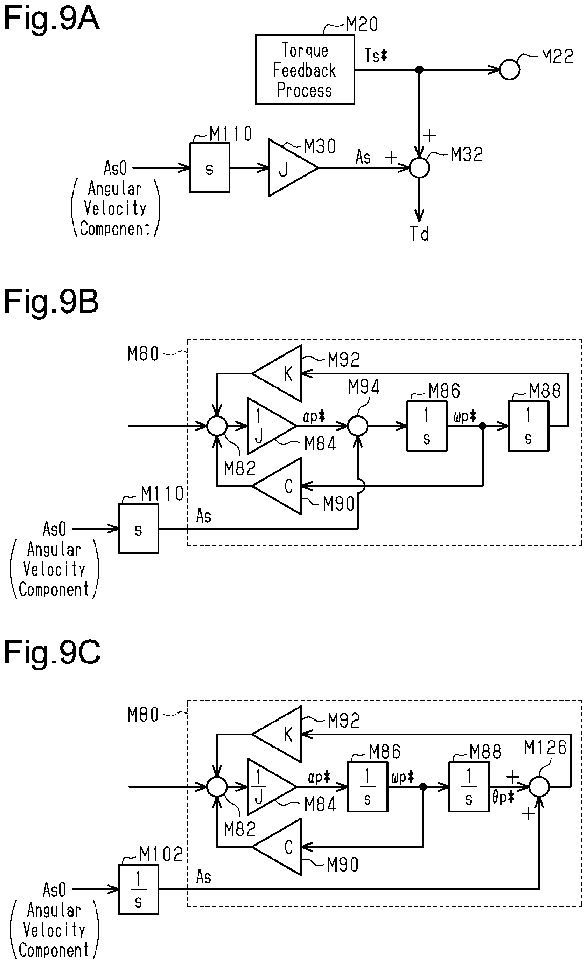

The contents of the process in Example 10 do not correspond to any process in the above-described embodiments and correspond to Fig. 9.

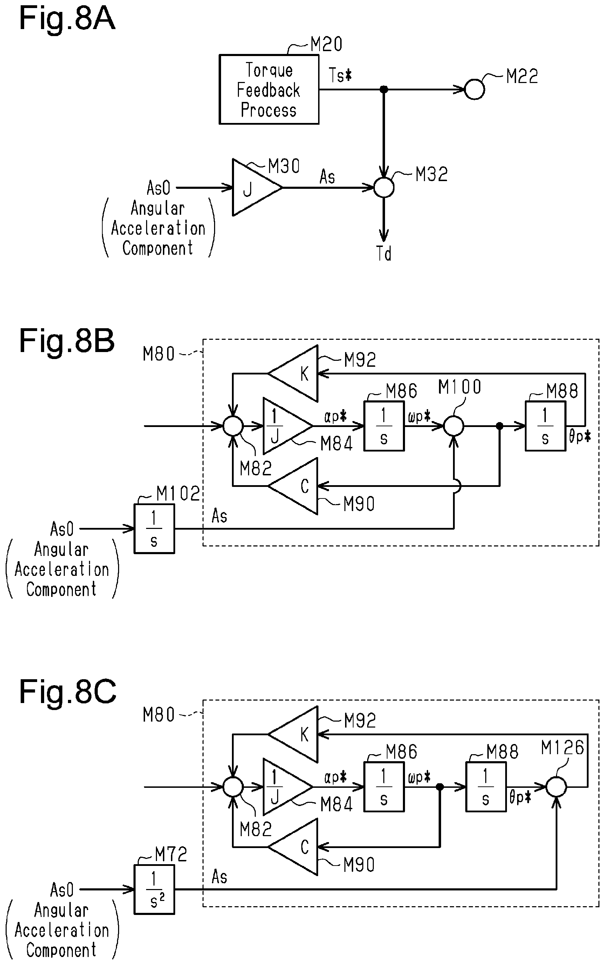

The contents of the process in Example 11 do not correspond to any process in the above-described embodiments and correspond to Fig. 8.

The contents of the process in Example 12 correspond to Fig. 2.

The contents of the process in Example 13 depending on Example 3 do not correspond to any process in the above-described embodiments and correspond to Fig. 6B, and the contents of the process in Example 13 depending on Example 6 correspond to Fig. 4.

The contents of the process in Example 14 depending on Example 4 do not correspond to any process in the above-described embodiments and correspond to Fig. 6A, and the contents of the process in Example 14 depending on Example 7 do not correspond to any process in the above-described embodiments and correspond to Fig. 5A

The contents of the process in Example 15 in which the correction target is a convertible angle do not correspond to any process in the above-described embodiments and correspond to Fig. 5B, and the contents of the process in Example 15

in which the correction target is a command value correspond to the process of Fig. 3.

Modifications

At least one of the features of the above-described embodiment may be modified as follows.

Correction Process with Driving Support Command Value having Dimension of Torque

The correction process executed when the driving support command value As0 has the dimension of torque is not limited to the processes illustrated in Figs. 3 and 4. For example, as shown in Fig. 5A, a division process using the inertia coefficient J by the inertia coefficient division process M70 and an integration process M102 are executed for the driving support command value As0 to convert the driving support command value As0 into the driving support command value As having the dimension of angular velocity. An addition process M100 may be executed to add the driving support command value As to an output value of the integration process M86 in the angle command value calculation process M80.

Also, for example, as shown in Fig. 5B, a division process using the inertia coefficient J by the inertia coefficient division process M70 and an integration process M102 are executed for the driving support command value As0 to convert the driving support command value As0 into a driving support command value Asf having the dimension of angular velocity. A subtraction process M106 may be executed to subtract the driving support command value Asf from a first order time differential value of the estimated value θpe input to the feedback term calculation process M56.

Further, in Fig. 5B, a division process using the inertia coefficient J by the inertia coefficient division process M70, the integration process M102, and an integration process M104 are executed for the driving support command value As0 to convert the driving support command value As0 into a driving support command value Ass having the dimension of angle. A subtraction process M108 is executed to subtract the driving support command value Ass from the estimated value θpe input to the feedback term calculation process M56. In the example shown in Fig. 5B, the driving support command value As0 is added to an output value of the feedforward term calculation process M60 by an addition process M101 without converting the dimension.

Correction Process with Driving Support Command Value having Dimension of Angle

The correction process executed when the driving support command value As0 has the dimension of angle is not limited to the process illustrated in Fig. 2. For example, as shown in Fig. 6A, a differentiation process M110 is executed for the driving support command value As0 to convert the driving support command value As0 into the driving support command value As having the dimension of angular velocity. The addition process M100 may be executed to add the driving support command value As to an output value of the integration process M86 in the angle command value calculation process M80.

For example, as shown in Fig. 6B, the second order differentiation process M28 is executed for the driving support command value As0 to convert the driving support command value As0 into the driving support command value As having the dimension of angular acceleration. The addition process M94 may be executed to add the driving support command value As to an output value of the angular acceleration command value calculation process M84 in the angle command value calculation process M80.

Also, for example, as shown in Fig. 6C, the second order differentiation process M28, a multiplication process using the inertia coefficient J by the inertia coefficient multiplication process M30, and a division process using the deceleration ratio Km by a conversion process M111 are executed for the driving support command value As0 to convert the driving support command value As0 into the driving support command value As having the dimension of torque. An addition process M112 may be executed to add the driving support command value As to the torque command value Tm*.

As shown in Fig. 6D, a q-axis current command value iq* of the electric motor 32 may be corrected by converting the driving support command value As0 into the driving support command value As having the dimension of current.

The q-axis current command value iq* is calculated by dividing the torque command value Tm* by a torque constant $\varphi$ through a torque constant division process M114. The operation signal generation process M26 operates the inverter 33 such that q-axis current flowing through the electric motor 32 has the q-axis current command value iq*.

The second order differentiation process M28, the multiplication process using the inertia coefficient J by the inertia coefficient multiplication process M30, the conversion process M111, and a division process using the torque constant $\varphi$ by a torque constant division process M116 are executed for the driving support command value As0 to convert the driving support command value As0 into the driving support command value As having the dimension of current. An addition process M118 may be executed to add the driving support command value As to the q-axis current command value iq*.

As will be described later in Electric Motor and Drive Circuit, when an interior permanent magnet synchronous motor (IPMSM) is used, it is desired that the correction amount of a d-axis current command value and the correction amount of a q-axis current command value be obtained through map calculation based on the driving support command value As having the dimension of torque by modifying the process of Fig. 6D.

Further, the processes illustrated in Figs. 6A to 6D do not have to be executed. Instead, for example, the driving support command value As converted into the dimension of angular velocity in Fig. 6A may be used to correct a first order time differential value of the pinion angle command value θp* input to the feedback term calculation process M56. Alternatively, the driving support command value As may be used to correct a first order time differential value of the estimated value θpe input to the feedback term calculation process M56.

Correction Process

In the correction process that converts the dimension of the driving support command value As0 and corrects a calculation parameter that occurs during calculation of an operation signal using the converted value, the driving support command value As0 does not have to have the dimension of torque or angle. For example, the driving support command value As0 may have a command value of current of the electric motor 32, the dimension of angular acceleration, or the dimension of angular velocity, which will now be described.

(I) When Driving Support Command Value As0 is Command Value of Current of Electric Motor 32

For example, as shown in Fig. 7A, a multiplication process using the torque constant $\varphi$ by a torque constant multiplication process M120 and a multiplication process using the deceleration ratio Km by a deceleration ratio multiplication process M122 are executed for the driving support command value As0 to convert the driving support command value As0 into the driving support command value As. The driving support command value As may be added to the steering operation amount Ts* by an addition process M124. The torque constant multiplication process M120 is a process that converts the driving support command value As0 having the dimension of current into the dimension of torque of the electric motor 32. The deceleration ratio multiplication process M122 is a process that converts the torque of the electric motor 32 into torque applied to the steering shaft 24.

Further, for example, as shown in Fig. 7B, the torque constant multiplication process M120, the deceleration ratio multiplication process M122, and the division process using the inertia coefficient J by the inertia coefficient division process M70 are executed for the driving support command value As0 to convert the driving support command value As0 into the driving support command value As having the dimension of angular acceleration. The driving support command value As may be added to the angular acceleration command value αp* by the addition process M94.

In addition, for example, as shown in Fig. 7C, the torque constant multiplication process M120, the deceleration ratio multiplication process M122, the inertia coefficient division process M70, and the integration process M102 are executed for the driving support command value As0 to convert the driving support command value As0 into the driving support command value As having the dimension of angular velocity. The driving support command value As may be added to the angular velocity command value ωp* by the addition process M100.

Additionally, for example, as shown in Fig. 7D, the torque constant multiplication process M120, the deceleration ratio multiplication process M122, the inertia coefficient division process M70, and the double integration process M72 are executed for the driving support command value As0 to convert the driving support command value As0 into the driving support command value As having the dimension of angle. The driving support command value As may be added to the pinion angle command value $\theta p^*$ by an addition process M126.

Instead of the processes illustrated in Figs. 7A to 7D, for example, the driving support command value that has been converted into the dimension of torque by the process of Fig. 7A may be used to correct the calculation parameter in the angle feedback process M50. This can be implemented by changing the parameter that corresponds to the driving support command value As0 and is input to the addition process M101 shown in Fig. 5B from the driving support command value shown in Fig. 5B to the driving support command value that has been converted into the dimension of torque by the process of Fig. 7A.

Further, for example, the driving support command value that has been converted into the dimension of angular velocity by the process of Fig. 7C may be used to correct the calculation parameter in the angle feedback process M50. This can be implemented by changing the parameter that corresponds to the driving support command value As0 and is input to the subtraction process M106 shown in Fig. 5B from the driving support command value shown in Fig. 5B to the driving support command value that has been converted into the dimension of angular velocity by the process of Fig. 7C.

Additionally, for example, the driving support command value that has been converted into the dimension of angle by the process of Fig. 7D may be used to correct the calculation parameter in the angle feedback process M50. This can be implemented by changing the parameter that corresponds to the driving support command value As0 and is input to the subtraction process M108 shown in Fig. 5B from the driving support command value shown in Fig. 5B to the driving support command value that has been converted into the dimension of angle by the process of Fig. 7D.

(II) When Driving Support Command Value As0 has Dimension of Angular Acceleration

For example, as shown in Fig. 8A, the inertia coefficient multiplication process M30 in Fig. 2 is executed for the driving support command value As0 having the dimension of angular acceleration to convert the driving support command value As0 into the driving support command value As having the dimension of torque. The required torque Td may be calculated by adding the driving support command value As to the steering operation amount Ts* by the addition process M32.

Further, for example, as shown in Fig. 8B, the integration process M102 is executed for the driving support command value As0 to convert the driving support command value As0 into the driving support command value As having the dimension of angular velocity. The driving support command value As may be added to the angular velocity command value $\omega p^*$ by the addition process M100.

In addition, for example, as shown in Fig. 8C, the double integration process M72 is executed for the driving support command value As0 to convert the driving support command value As0 into the driving support command value As having the dimension of angle. The driving support command value As may be added to the pinion angle command value $\theta p^*$ by an addition process M126.

Instead of the processes illustrated in Figs. 8A to 8C, for example, the driving support command value that has been converted into the dimension of torque by the process of Fig. 8A may be used to correct the calculation parameter in the angle feedback process M50. This can be implemented by changing the parameter that corresponds to the driving support command value As0 and is input to the addition process M101 shown in Fig. 5B from the driving support command value shown in Fig. 5B to the driving support command value that has been converted into the dimension of torque by the process of Fig. 8A.

Further, for example, the driving support command value that has been converted into the dimension of angular velocity by the process of Fig. 8B may be used to correct the calculation parameter in the angle feedback process M50. This can be implemented by changing the parameter that corresponds to the driving support command value As0 and is input to the subtraction process M106 shown in Fig. 5B from the driving support command value shown in Fig. 5B to the driving support command value that has been converted into the dimension of angular velocity by the process of Fig. 8B.

Additionally, for example, the driving support command value that has been converted into the dimension of angle by the process of Fig. 8C may be used to correct the calculation parameter in the angle feedback process M50. This can be implemented by changing the parameter that corresponds to the driving support command value As0 and is input to the subtraction process M108 shown in Fig. 5B from the driving support command value shown in Fig. 5B to the driving support command value that has been converted into the dimension of angle by the process of Fig. 8C.

(III) When Driving Support Command Value As0 has Dimension of Angular Velocity

For example, as shown in Fig. 9A, the differentiation process M110 and the inertia coefficient multiplication process M30 are executed for the driving support command value As0 to convert the driving support command value As0 into the driving support command value As having the dimension of torque. The required torque Td may be calculated by adding the driving support command value As to the steering operation amount Ts* by the addition process M32.

For example, as shown in Fig. 9B, the differentiation process M110 is executed for the driving support command value As0 to convert the driving support command value As0 into the driving support command value As having the dimension of angular acceleration. The driving support command value As may be added to the angular acceleration command value $\alpha p*$ by the addition process M94.

In addition, for example, as shown in Fig. 9C, the integration process M102 is executed for the driving support command value As0 to convert the driving support command value As0 into the driving support command value As having the dimension of angle. The driving support command value As may be added to the pinion angle command value $\theta p*$ by an addition process M126.

Instead of the processes illustrated in Figs. 9A to 9C, for example, the driving support command value As0 and the driving support command value that has been converted into the dimension of torque by the process of Fig. 9A may be used to correct the calculation parameter in the angle feedback process M50. This can be implemented by changing the parameter that corresponds to the driving support command value As0 and is input to the addition process M101 shown in Fig. 5B to the driving support command value As0 and the driving support command value that has been converted into the dimension of torque by the process of Fig. 9A.

In addition, for example, the driving support command value As0 and the driving support command value that has been converted into the dimension of angle by the process of Fig. 9C may be used to correct the calculation parameter in the angle feedback process M50. This can be implemented by changing the parameter that corresponds to the driving support command value As0 and is input to the subtraction process M108 shown in Fig. 5B to the driving support command value As0 and the driving support command value that has been converted into the dimension of angle by the process of Fig. 9C.

(IV) Others

The dimension conversion processes illustrated in Figs. 2, 3, and 5 to 9 do not have to be executed in the orders illustrated therein. For example, in the process of Fig. 2, the driving support command value As may be calculated by executing the inertia coefficient multiplication process M30 for the driving support command value As0 and then executing the second order differentiation process M28 for an output value of the inertia coefficient multiplication process M30.

Time Differentiation

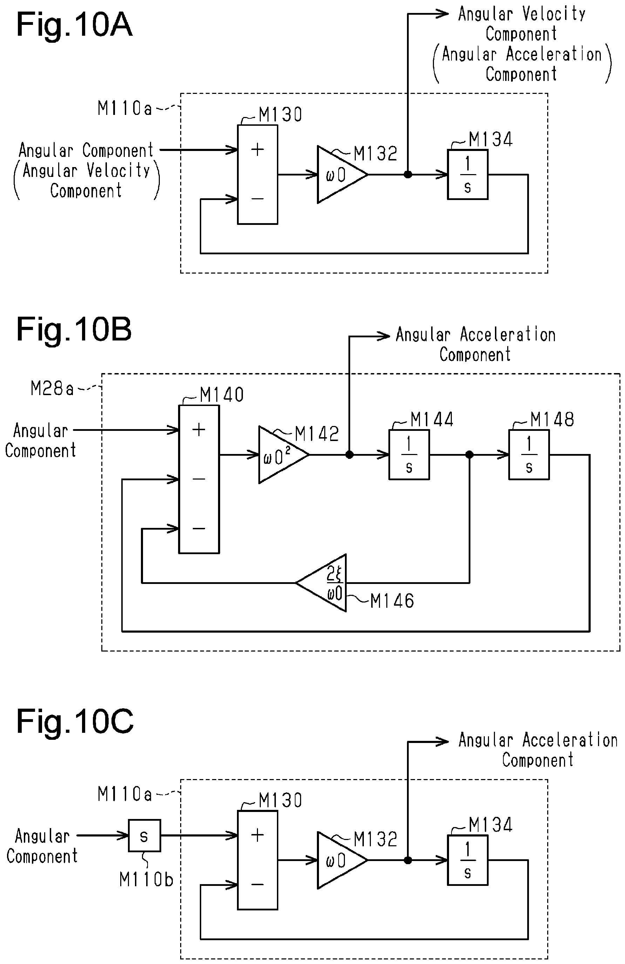

Given the possibility of the differentiation process M110 illustrated in Figs. 6A, 9A, and 9B increasing noise, the differentiation process M110 may be changed to a process that obtains a first order time differential value using a first order delay process M110a as illustrated in Fig. 10A. That is, when an angular component is used as an input of the first order delay process M110a, the difference between the angular component and a first order delay value thereof may be calculated by a difference calculation process M130. This difference is multiplied by a gain $\omega 0$ through a gain multiplication process M132. Then, an integration process M134 is executed for an output value of the gain multiplication process M132 to output the first order delay value. In this case, the output value of the gain multiplication process M132 is an angular velocity component, which is a first order time differential value of the input angular component. The first order delay value is obtained by executing a first order delay filter $1 / \{1 + (s / \omega 0)\}$ for the input.

Further, when the angular velocity component is used as an input of the first order delay process M110a, the output value of the gain multiplication process M132 obtained by the same process as Fig. 10A is an angular acceleration component, which is a first order time differential value of the input angular velocity component.

Given the possibility of the second order differentiation process M28 illustrated in Figs. 2 and 6B to 6D increasing noise, the second order differentiation process M28 may be changed to a process that obtains a second order time differential value using a second order delay process M28a as illustrated in Fig. 10B. That is, the difference between an angular component used as the input of the second order delay process M28a and a first order delay value of the angular component with a second order delay value of the angular component is calculated by a difference calculation process M140. A first gain multiplication process M142 is executed to multiply the difference by the first gain $\omega 0 \cdot \omega 0$. An integration process M144 is executed for an output value of the first gain multiplication process M142. Further, a second gain multiplication process M146 is executed to multiply an output value of the integration process M144 by a second gain $(2 \cdot \xi) / \omega 0$ to calculate the first order delay value. Furthermore, an integration process M148 is executed for the output value of the integration process M144 to calculate the second order delay value. In this case, the output value of the first gain multiplication process M142 is an angular acceleration component, which is a second order time differential value of the input angular component. The second order delay value is obtained by executing a second order delay filter ($\omega0\cdot\omega0$ / ($s\cdot s + 2\cdot\omega0\cdot\xi\cdot s + \omega0\cdot\omega0$)) for the input.

The second order differentiation process M28 may be changed to a process that obtains a second order time differential value using a complex process including the first order delay process M110a and a differentiation process M110b as shown in Fig. 10C. That is, an output of the gain multiplication process M132 may be set as an angular acceleration component that is a second differential value of the input angular component by sequentially executing the differentiation process M110b and the first order delay process M110a for an angular component. Alternatively, for example, an angular acceleration component that is a second order time differential value of the input angular component may be obtained by executing the first order delay process M110a for an angular component and executing the differentiation process M110b for an output value of the gain multiplication process M132.

Disturbance Observer

For example, in the two-degree-of-freedom operation amount calculation process M62 in Fig. 4, the disturbance torque Tld and the steering operation amount Ts* may be subtracted from the sum of the feedback operation amount Ttfb and the feedforward operation amount Ttff, and the value used as an input of the disturbance observer M52 may be changed from the angle operation amount Tt* to Tt*+ Ts*. In this case, the estimated disturbance torque Tld is torque excluded from the torque that affects the pinion angle $\theta$p other than the torque of the electric motor 32.

Alternatively, for example, in the two-degree-of-freedom operation amount calculation process M62 in Fig. 4, the disturbance torque Tld, the steering operation amount Ts*, and the steering torque Th may be subtracted from the sum of the feedback operation amount Ttfb and the feedforward operation amount Ttff, and the value used as an input of the disturbance observer M52 may be changed from the angle operation amount Tt* to Tt* + Ts*+ Th. In this case, the estimated disturbance torque Tld is torque excluded from the torque that affects the pinion angle $\theta$p other than the sum of the torque of the electric motor 32 and the steering torque Th.

The disturbance torque Tld does not have to be calculated in the manner illustrated in the above-described embodiment. For example, the disturbance torque Tld may be calculated by subtracting the angle operation amount Tt*, the steering operation amount Ts*, and the steering torque Th from a value obtained by multiplying the inertia coefficient J by the second order time differential value of the pinion angle command value $\theta$p*. Alternatively, the disturbance torque Tld may be calculated by subtracting the angle operation amount Tt*, the steering operation amount Ts*, and the steering torque Th from a value obtained by multiplying the inertia coefficient J by the second order time differential value of the pinion angle $\theta$p. As another option, the disturbance torque Tld may be calculated by subtracting the angle operation amount Tt*, the steering operation amount Ts*, and the steering torque Th from a value obtained by multiplying the inertia coefficient J by the second order time differential value of the estimated value $\theta$pe.

Angle Feedback Process

In the above-described embodiment, the feedforward operation amount Ttff is calculated based on a second order time differential value of the pinion angle command value $\theta$p*. Instead, the first feedforward operation amount Ttff may be calculated based on, for example, the second order time differential value of the pinion angle $\theta$p. Alternatively, the feedforward operation amount Ttff may be calculated based on, for example, the second order time differential value of the difference between the pinion angle command value $\theta$p* and the pinion angle $\theta$p.

The feedback control amount input to the feedback term calculation process M56 is not limited to the estimated value $\theta$pe or the first order time differential value of the estimated value $\theta$pe. Instead, the feedback control amount may be the pinion angle $\theta$p or the first order time differential value of the pinion angle $\theta$p.

The feedback term calculation process M56 is not limited to the process that outputs the sum of the a proportional term and a differential term. Instead, for example, the feedback term calculation process M56 may be a process that outputs only a proportional term or a process that only outputs a differential term. Alternatively, for example, the feedback term calculation process M56 may be a process that outputs the sum of an integral term and at least one of a proportional term and a differential term.

Angle Operation Amount Calculation Process

In the above-described embodiment, the angle feedback process M50 is the angle operation amount calculation process. However, the angle feedback process M50 does not have to include the feedback term calculation process M56 and the disturbance observer M52. The angle operation amount calculation process may be a process that, for example, sets the feedforward operation amount Ttff to the angle operation amount Tt*.

Angle Command Value Calculation Process M40

In Fig. 3, the angle command value calculation process M40 is not described in detail. The angle command value calculation process M40 may include, for example, the base target torque calculation process M10, the hysteresis process M16, the hysteresis reflection process M18, the torque feedback process M20, the axial force calculation process M22, the angle command value calculation process M80 in Fig. 4.

The steering operation amount $Ts^*$ does not have to be used for the feedback control that adjusts the steering torque $Th$ to the target torque $Th^*$. For example, the angle command value calculation process M40 may calculate the assist torque that assists steering based on the steering torque $Th$, as the steering operation amount $Ts^*$, and output the sum of the calculated assist torque and the steering torque $Th$ as the axial force $Taf$ to the angle command value calculation process M80.

Alternatively, the angle command value calculation process M40 does not have to include the angle command value calculation process M80. For example, in the angle command value calculation process M40, the CPU 42 may obtain the pinion angle command value $\theta p^*$ through map calculation in a state in which the ROM 44 stores in advance map data that includes the steering torque $Th$, the pinion angle $\theta p$, and the vehicle speed $V$ as inputs and the pinion angle command value $\theta p^*$ as an output.

Convertible Angle

In the above-described embodiment, the pinion angle $\theta p$ is used as the convertible angle. Instead, for example, the steerable angle of the steerable wheel may be used as the convertible angle.

Steering Operation Amount

In the above-described embodiment, the steering operation amount $Ts^*$ is converted into the torque of the steering shaft 24. Instead, for example, the steering operation amount $Ts^*$ may be converted into the torque of the electric motor 32.

Angle Operation Amount

In the above-described embodiment, the angle operation amount $Tt^*$ is converted into the torque of the steering shaft 24. Instead, for example, the angle operation amount $Tt^*$ may be converted into the torque of the electric motor 32.

Target Torque Calculation Process

The base target torque calculation process M10 is not limited to a process that calculates the base target torque $Thb^*$ in accordance with the axial force $Taf$ and the vehicle speed $V$. Instead, for example, the base target torque calculation process M10 may be a process that calculates the base target torque $Thb^*$ only based on the axial force $Taf$.

The base target torque $Thb^*$ does not have to be corrected with the hysteresis correction amount $Thys$.

Base Target Torque

The base target torque $Thb^*$ does not have to be obtained based on the axial force $Taf$. Instead, for example, the assist torque that assists steering may be calculated based on the steering torque $Th$, and the base target torque $Thb^*$ may be calculated based on the sum of the assist torque and the steering torque.

Steering Controller

The steering controller is not limited to a device that includes the CPU 42 and the ROM 44 and executes software processing. For example, a dedicated hardware circuit (such as an ASIC) may be provided that executes at least part of the software processes executed in the above-described embodiment. That is, the steering controller may be modified as long as it has any one of the following configurations (a) to (c). (a) A configuration including a processor that executes all of the above-described processes according to programs and a program storage device such as a ROM that stores the programs. (b) A configuration including a processor and a program storage device that execute part of the above-described processes according to the programs and a dedicated hardware circuit that executes the remaining processes. (c) A configuration including a dedicated hardware circuit that executes all of the above-described processes. A plurality of software processing circuits each including a processor and a program storage device and a plurality of dedicated hardware circuits may be provided. That is, the above-described processes may be executed in any manner as long as the processes are executed by processing circuitry that includes at least one of a set of one or more software processing circuits and a set of one or more dedicated hardware circuits.

Electric Motor and Drive Circuit

The electric motor is not limited to a SPMSM and may be, for example, an IPMSM. Alternatively, the electric motor is not limited to a synchronous motor and may be an induction motor. As another option, the electric motor may be, for example, a brushed direct-current electric motor. In this case, an H bridge circuit simply needs to be employed for the drive circuit.

Steering Actuator

The steering actuator 30 does not have to be the actuator illustrated in the above-described embodiment. The steering actuator 30 may be of, for example, a dual pinion type including a second pinion shaft that transmits the power of the electric motor 32 to the rack shaft 26 in addition to the pinion shaft 24c. Further, in the steering actuator 30, the output shaft 32a of the electric motor 32 may be mechanically coupled to the steering shaft 24. In this case, the steering actuator and the steering mechanism 20 share the steering shaft 24 and the rack-and-pinion mechanism 27.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

**Claims**

1. A steering controller (40) for operating a steering actuator (30) that incorporates an electric motor (32) and steers a steerable wheel (12), wherein
the steering controller (40) is configured to execute:

an operation process (M10, M16, M18, M20, M22, M24, M26) that operates a drive circuit (33) of the electric motor (32) using an operation signal (MS) to control torque of the electric motor (32) based on a steering torque (Th) input by a driver; and
a correction process (M28, M30, M32) that corrects a calculation parameter that occurs during calculation of the operation signal (MS) based on a driving support command value (As0) input from outside of the steering controller (40), the driving support command value (As0) being used to support driving by the driver, and

wherein the correction process (M28, M30, M32) includes

a conversion process that converts a dimension of the driving support command value (As0) into a dimension of the calculation parameter, and
a process that corrects the calculation parameter using the driving support command value (As) of which the dimension has been converted.

2. The steering controller (40) according to claim 1, wherein
the driving support command value (As0) has a dimension of angle,
the calculation parameter has a dimension of torque,
a complex process includes a first order differentiation process and a first order delay process, and
the conversion process includes a process that converts the driving support command value (As0) into the dimension of torque using any one of a second order differentiation process, a second order delay process, and the complex process.

3. The steering controller (40) according to claim 1, wherein
the driving support command value (As0) has a dimension of angle,
the calculation parameter has a dimension of angular acceleration,
a complex process includes a first order differentiation process and a first order delay process, and

17

the conversion process includes a process that converts the driving support command value (As0) into the dimension of angular acceleration using any one of a second order differentiation process, a second order delay process, and the complex process.

4. The steering controller (40) according to claim 1, wherein
the driving support command value (As0) has a dimension of angle,
the calculation parameter has a dimension of angular velocity, and
the conversion process includes a process that converts the driving support command value (As0) into the dimension of angular velocity using a first order differentiation process or a first order delay process.

5. The steering controller (40) according to claim 1, wherein
the driving support command value (As0) has a dimension of angle,
the calculation parameter has a dimension of current flowing through the electric motor (32),
a complex process includes a first order differentiation process and a first order delay process, and
the conversion process includes a process that converts the driving support command value (As0) into the dimension of current using any one of a second order differentiation process, a second order delay process, and the complex process.

6. The steering controller (40) according to claim 1, wherein
the driving support command value (As0) has a dimension of torque,
the calculation parameter has a dimension of angular acceleration, and
the conversion process includes a process that converts the driving support command value (As0) into the dimension of angular acceleration using a multiplication process that multiplies a coefficient by the driving support command value (As0).

7. The steering controller (40) according to claim 1, wherein
the driving support command value (As0) has a dimension of torque,
the calculation parameter has a dimension of angular velocity, and
the conversion process includes a process that converts the driving support command value (As0) into the dimension of angular velocity using an integration process.

8. The steering controller (40) according to claim 1, wherein
the driving support command value (As0) has a dimension of torque,
the calculation parameter has a dimension of angle, and
the conversion process includes a process that converts the driving support command value (As0) into the dimension of angle using a double integration process with respect to time.

9. The steering controller (40) according to claim 1, wherein
the driving support command value (As0) has a dimension of current,
the calculation parameter has a dimension of any one of parameters including torque, angle, angular velocity, and angular acceleration, and
the conversion process includes a process that converts the driving support command value (As0) into the dimension of the one of the parameters.

10. The steering controller (40) according to claim 1, wherein
the driving support command value (As0) has a dimension of angular velocity,
the calculation parameter has a dimension of any one of parameters including angle, angular acceleration, and torque, and
the conversion process includes a process that converts the driving support command value (As0) into the dimension of the one of the parameters.

11. The steering controller (40) according to claim 1, wherein
the driving support command value (As0) has a dimension of angular acceleration,
the calculation parameter has a dimension of any one of parameters including angle, angular velocity, and torque, and
the conversion process includes a process that converts the driving support command value (As0) into the dimension of the one of the parameters.

12. The steering controller (40) according to claim 2, wherein

the operation process (M10, M16, M18, M20, M22, M24, M26) includes

a process that calculates a steering operation amount (Ts*) used for feedback control that adjusts the steering torque (Th) to a target torque (Th*), the steering operation amount (Ts*) having the dimension of torque, and
a process that operates the drive circuit (33) based on the steering operation amount (Ts*), and

the calculation parameter is the steering operation amount (Ts*).

**13.** The steering controller (40) according to claim 3 or 6, wherein
the operation process (M10, M16, M18, M20, M22, M80, M50, M98, M24, M26) includes

an angle command value calculation process (M80) that calculates an angle command value (θp*) based on the steering torque (Th), the angle command value (θp*) being a command value of a convertible angle (θp) that is convertible into a steerable angle of the steerable wheel (12),
an angle operation amount calculation process (M50) that calculates an angle operation amount (Tt*) used to adjust the convertible angle (θp) to the angle command value (θp*), and
a process that operates the drive circuit (33) based on the angle operation amount (Tt*),

the angle command value calculation process (M80) includes a process that calculates a target angular acceleration (αp*) based on the steering torque (Th), and
the calculation parameter is the target angular acceleration (αp*).

**14.** The steering controller (40) according to claim 4 or 7, wherein
the operation process (M10, M16, M18, M20, M22, M80, M50, M98, M24, M26) includes

an angle command value calculation process (M80) that calculates an angle command value (θp*) based on the steering torque (Th), the angle command value (θp*) being a command value of a convertible angle (θp) that is convertible into a steerable angle of the steerable wheel (12),
an angle operation amount calculation process (M50) that calculates an angle operation amount (Tt*) used to adjust the convertible angle (θp) to the angle command value (θp*), and
a process that operates the drive circuit (33) based on the angle operation amount (Tt*),

the angle command value calculation process (M80) includes a process that calculates a target angular velocity (ωp*) based on the steering torque (Th), and
the calculation parameter is the target angular velocity (ωp*).

**15.** The steering controller (40) according to claim 8, wherein
the operation process (M40, M50, M24, M26) includes

an angle operation amount calculation process (M50) that calculates an angle operation amount (Tt*) used for a feedback control that adjusts a convertible angle (θp) to an angle command value (θp*) of the convertible angle (θp), the convertible angle (θp) being convertible into a steerable angle of the steerable wheel (12),
a process that operates the drive circuit (33) based on the angle operation amount (Tt*), and

the calculation parameter is one of the convertible angle (θp) and the angle command value (θp*) input to the angle operation amount calculation process (M50).

**16.** A steering control method for operating a steering actuator (30) that incorporates an electric motor (32) and steers a steerable wheel (12), the steering control method comprising:

executing an operation process (M10, M16, M18, M20, M22, M24, M26) that operates a drive circuit (33) of the electric motor (32) using an operation signal (MS) to control torque of the electric motor (32) based on a steering torque (Th) input by a driver; and
executing a correction process (M28, M30, M32) that corrects a calculation parameter that occurs during calculation of the operation signal (MS) based on a driving support command value (As0) input from outside, the driving support command value (As0) being used to support driving by the driver, wherein
the correction process (M28, M30, M32) includes

converting a dimension of the driving support command value (As0) into a dimension of the calculation parameter, and
correcting the calculation parameter using the driving support command value (As) of which the dimension has been converted.

Fig.1

Fig.2

Fig.3

# Fig.4

## Fig.5A

## Fig.5B

# Fig.6A

As0 (Angular Component)

# Fig.6B

As0 (Angular Component)

# Fig.6C

# Fig.6D

## Fig.7A

AsO (Current Component) → ▷φ ~M120 → ▷Km ~M122 → As

~M20
Torque Feedback Process → Ts✱ → ⊕ (+ +) M124 → ⊕ M22 → Taf

Th

## Fig.7B

AsO (Current Component) → ▷φ ~M120 → ▷Km ~M122 → ▷$\frac{1}{J}$ ~M70 → As

M80 ~
Taf → ⊕ → ▷$\frac{1}{J}$ ~M82 → ap✱ M84 → ⊕ (+ +) M94 → $\frac{1}{s}$ ~M86 → ωp✱ → $\frac{1}{s}$ ~M88 → θp✱
▷K ~M92
◁C ~M90

## Fig.7C

AsO (Current Component) → ▷φ ~M120 → ▷Km ~M122 → ▷$\frac{1}{J}$ ~M70 → $\frac{1}{s}$ ~M102 → As

M80 ~
Taf → ⊕ → ▷$\frac{1}{J}$ ~M82 → ap✱ M84 → $\frac{1}{s}$ ~M86 → ωp✱ → ⊕ (+ +) M100 → $\frac{1}{s}$ ~M88 → θp✱
▷K ~M92
◁C ~M90

## Fig.7D

AsO (Current Component) → ▷φ ~M120 → ▷Km ~M122 → ▷$\frac{1}{J}$ ~M70 → $\frac{1}{s^2}$ ~M72 → As

M80 ~
Taf → ⊕ → ▷$\frac{1}{J}$ ~M82 → ap✱ M84 → $\frac{1}{s}$ ~M86 → ωp✱ → $\frac{1}{s}$ ~M88 → θp✱ → ⊕ (+ +) M126 → θp✱
▷K ~M92
◁C ~M90

# Fig.8A

# Fig.8B

# Fig.8C

## Fig.9A

## Fig.9B

## Fig.9C

## Fig.10A

Angular Velocity
Component
$\left(\begin{array}{c}\text{Angular Acceleration} \\ \text{Component}\end{array}\right)$

M110a

Angular Component
$\left(\begin{array}{c}\text{Angular Velocity} \\ \text{Component}\end{array}\right)$

M130
+
−

M132
ω0

M134
$\frac{1}{s}$

## Fig.10B

Angular Acceleration
Component

M28a

Angular
Component

M140
+
−
−

M142
ω0²

M144
$\frac{1}{s}$

M148
$\frac{1}{s}$

M146
$\frac{2\xi}{\omega0}$

## Fig.10C

Angular Acceleration
Component

M110a

Angular
Component

s
M110b

M130
+
−

M132
ω0

M134
$\frac{1}{s}$

Europäisches
Patentamt
European
Patent Office
Office européen
des brevets

# EUROPEAN SEARCH REPORT

Application Number

EP 20 15 9065

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 842 833 A2 (JTEKT CORP [JP]) 4 March 2015 (2015-03-04) | 1-12,15, 16 | INV. B62D15/02 B62D5/04 |
| Y | * paragraphs [0026] - [0028], [0033], [0038] - [0040]; claims; figures * | 12-14 | |
| Y | EP 2 842 839 A2 (JTEKT CORP [JP]) 4 March 2015 (2015-03-04) * paragraphs [0040] - [0042]; claims; figures * | 12 | |
| Y | US 2013/041557 A1 (ENDO MASAYA [JP] ET AL) 14 February 2013 (2013-02-14) * paragraphs [0047] - [0049]; claims; figures * | 13 | |
| Y | EP 3 184 403 A1 (NSK LTD [JP]) 28 June 2017 (2017-06-28) * paragraphs [0024] - [0025]; claims; figures * | 14 | |

TECHNICAL FIELDS
SEARCHED (IPC)

B62D

The present search report has been drawn up for all claims

| Place of search | Date of completion of the search | Examiner |
|---|---|---|
| The Hague | 16 June 2020 | Ducher, Alban |

EPO FORM 1503 03.82 (P04C01)

## ANNEX TO THE EUROPEAN SEARCH REPORT
## ON EUROPEAN PATENT APPLICATION NO.

EP 20 15 9065

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2020

| Patent document cited in search report | | | Publication date | Patent family member(s) | | | Publication date |
|---|---|---|---|---|---|---|---|
| EP | 2842833 | A2 | 04-03-2015 | CN | 104417605 | A | 18-03-2015 |
| | | | | EP | 2842833 | A2 | 04-03-2015 |
| | | | | JP | 6142733 | B2 | 07-06-2017 |
| | | | | JP | 2015042527 | A | 05-03-2015 |
| | | | | US | 2015057889 | A1 | 26-02-2015 |
| EP | 2842839 | A2 | 04-03-2015 | CN | 104417612 | A | 18-03-2015 |
| | | | | EP | 2842839 | A2 | 04-03-2015 |
| | | | | JP | 6146204 | B2 | 14-06-2017 |
| | | | | JP | 2015042528 | A | 05-03-2015 |
| | | | | US | 2015057890 | A1 | 26-02-2015 |
| US | 2013041557 | A1 | 14-02-2013 | EP | 2578471 | A1 | 10-04-2013 |
| | | | | JP | 5579267 | B2 | 27-08-2014 |
| | | | | JP | WO2011152214 | A1 | 25-07-2013 |
| | | | | US | 2013041557 | A1 | 14-02-2013 |
| | | | | WO | 2011152214 | A1 | 08-12-2011 |
| EP | 3184403 | A1 | 28-06-2017 | BR | 112017009527 | A2 | 11-09-2018 |
| | | | | CN | 107531275 | A | 02-01-2018 |
| | | | | EP | 3184403 | A1 | 28-06-2017 |
| | | | | JP | 6098764 | B2 | 29-03-2017 |
| | | | | JP | WO2016072143 | A1 | 27-04-2017 |
| | | | | US | 2017232997 | A1 | 17-08-2017 |
| | | | | WO | 2016072143 | A1 | 12-05-2016 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004203089 A